# EUROPÄISCHE PATENTSCHRIFT

(11) **EP 0 655 173 B1**
(45) Veröffentlichungstag und Bekanntmachung des Hinweises auf die Patenterteilung: **21.05.1997**
(21) Anmeldenummer: 93915906.7
(22) Anmeldetag: 14.07.1993
(51) Int. Cl.: H02K 5/22, E05B 47/00

(54) **VORRICHTUNG ZUR VERBINDUNG EINES MOTORS MIT WENIGSTENS ZWEI ELEKTRISCHEN LEITERBAHNEN**
DEVICE FOR CONNECTING A MOTOR TO AT LEAST TWO ELECTRICAL CONDUCTOR TRACKS
DISPOSITIF POUR RELIER UN MOTEUR A AU MOINS DEUX PISTES CONDUCTRICES

(30) Priorität: 11.08.1992 DE 4226509
(43) Veröffentlichungstag der Anmeldung: 31.05.1995
(73) Patentinhaber: ITT Automotive Europe GmbH, 60488 Frankfurt am Main (DE)
(72) Erfinder: BAUMEISTER, Udo, D-74321 Bietigheim-Bissingen (DE)
(86) Internationale Anmeldenummer: EP9301844
(87) Internationale Veröffentlichungsnummer: WO9405071

(56) Entgegenhaltungen:
- EP-A- 0 056 756
- EP-A- 0 119 133
- EP-A- 0 360 623
- EP-A- 0 539 094
- DE-A- 3 920 467
- DE-U- 9 112 954
- GB-A- 2 232 011
- IBM TECHNICAL DISCLOSURE BULLETIN, Bd. 30, Nr. 9, Februar 1988, New York US, Seiten 138-139; 'Electrical connection of a motor without the use of cables'

## Beschreibung

Die Erfindung bezieht sich auf eine Vorrichtung zur Verbindung eines elektrischen Kleinmotors mit wenigstens zwei elektrischen Leiterbahnen einer Platine, insbesondere eines Gehäuses einer Zentralverriegelungsvorrichtung eines Kraftfahrzeugs. Kleinmotoren finden heutzutage bei den verschiedensten Servovorrrichtungen Anwendung. Im Automobilbau gibt es eine ganze Anzahl solcher Servovorrichtungen z.B. zum öffnen und Schließen der Fenster oder auch zur Betätigung einer Zentralverriegelungsvorrichtung. Der Kleinmotor bzw. auch mehrere solcher Kleinmotoren müssen mit den hierfür vorgesehenen Leiterbahnen einer Platine o. dgl. in vorgesehener Weise verbunden werden. Ursprünglich hat man einen Kabelanschluß an jedem Motor vorgesehen und das Kabel mit den Leiterbahnen der Platine bspw. durch Stecken oder Löten verbunden. Es wurde auch vorgeschlagen Kontaktbleche des Motors mit Flachsteckern zu kontaktieren. Diese Verbindungsformen sind teuer und da sie manuell durchgeführt werden müssen auch zeitaufwendig. Außerdem ist eine Kabelverlegung im Gehäuse der Vorrichtung oftmals unerwünscht, weil das Kabel den Bewegungsablauf sich bewegender Bauteile stören kann. Dies gilt insbesondere dann, wenn die Vorrichtung, welche mit dem oder den Motoren ausgestattet ist, Erschütterungen ausgesetzt wird, was bei Kraftfahrzeugen stets der Fall ist.

Es ist auch bekannt solche Kleinmotoren mit Slide-Connectors auszustatten, die nach Art von Kontaktblechen vom Motor abstehen. Diese Slide-Connectors werden dann in Öffnungen der Leiterbahnen eingeschoben und direkt mit diesen verlötet. Man muß zwar in diesem Falle keine Kabel verlegen, jedoch müssen dabei die Kleinmotoren eine genau definierte Lage gegenüber der Platine bzw. den in Frage stehenden Leiterbahnen einnehmen. Diese definierte Lage entspricht oftmals nicht der an sich gewünschten Einbaulage des Motors. Dies gilt vor allen Dingen dann, wenn der Motor kein kreisrundes, sondern ein ovales oder ähnliches unrundes Gehäuse besitzt. Des weiteren ist das Layout der Leiterbahnen von der Gestaltung des Motors abhängig. Werden am Motor Änderungen vorgenommen, so führt dies zu einer entsprechenden Abänderung der Leiterbahnen. Dies ist zeitaufwendig und in aller Regel auch sehr kostenintensiv.

Aus dem Dokument: IBM Technical Disclosure Bulletin, Band 30, Nr. 9, Februar 1988, Seiten 138 - 139, ist ein elektrischer Kleinmotor mit drei Anschlußkontakten bekannt, der mittels eines Zwischenstückes mit den Leiterbahnenden einer Platine verbunden werden kann. Die Kontakte des Motors werden seitlich in das Zwischenstück eingefügt, wobei entsprechende elektrische Verbindungselemente im Zwischenstück kontaktiert werden. Diese wiederum ragen aus dem Boden des Zwischenstückes heraus und können mit den Leiterbahnen auf einer Platine verbunden werden.

Aus der DE 360 623 A2 ist eine auf das Ende eines Motor aufsetzbare Kappe mit leitenden Elementen bekannt, diese ragen aus der Innenseite der Kappe hervor und sind in entsprechende Anschlußschlitze im Motor elektrisch leitend einsteckbar. Die anderen Enden führen zu einem Steckergehäuse, daß einstückig mit der Kappe ausgebildet ist.

Es liegt infolge dessen die Aufgabe vor, eine Vorrichtung der eingangs genannten Art so weiterzubilden, daß trotz eines fehlenden Kabelanschlusses der Motor einfach und rasch montiert werden kann. Insbesondere soll erreicht werden, daß Kleinmotoren mit Anschlußelementen an ihrer Stirnseite mit Leiterbahnendstücken, die senkrecht aus einem Gehäuseboden hervorstehen, verbunden werden können, wobei die Motoren selbst flach auf den Gehäuseboden gelegt werden sollen.

Zur Lösung dieser Aufgabe wird eine Vorrichtung gemäß dem Hauptanspruch vorgeschlagen. Mit einem derartigen Verbindungsstück wird mit einfachen Mitteln erreicht, daß auf kleinstem Raum eine elektrisch leitende Verbindung zwischen dem Motor und den Leiterbahnen hergestellt wird, wobei an dem Motor keine Änderungen hinsichtlich der Lage der elektrischen Anschlüsse vorgenommen werden muß.

Das zwischen die Leiterbahnendstücke und die Steckerbuchsen des Kleinmotors eingesetzte Zwischenstück schafft einerseits die elektrisch leitende Verbindung zwischen dem Motor und den Leiterbahnen und ermöglicht andererseits eine rasche Anpassung an einen etwas abgewandelten Motor und/oder geänderte Leiterbahnendstücke. Es kommt noch hinzu, daß die Verbindung des Motors mit dem Zwischenstück sowie die Verbindung des letzteren mit den Leiterbahnendstücken jeweils steckbar erfolgt, wodurch Kabel in der angestrebten Weise entfallen. Die jeweiligen Steckverbindungen können in bekannter Weise gestaltet sein. Dadurch ist die Montage bspw. des mit dem Zwischenstück gekuppelten Kleinmotors mit den Leiterbahnenden oder im speziellen Fall mit der Zentralverriegelungsvorrichtung einfach, schnell und sicher möglich, wobei alle Voraussetzungen für eine automatische Montage gegeben sind.

Die motorseitigen Enden der elektrisch leitenden Elemente flache Steckerstifte bilden, die klemmend in den Steckerbuchsen des Kleinmotors gehalten sind. Die Steckerbuchsen haben in diesem Falle eine flache Einstecköffnung, zwischen welche die elektrisch leitenden Elemente federelastisch klemmend eingesteckt werden.

Eine weitere Ausgestaltung der Erfindung ergibt sich aus Anspruch 2. Der Seitenabstand der darin erwähnten motorseitigen Enden der elektrisch leitenden Elemente entspricht dem Seitenabstand der Steckerbuchsen des Kleinmotors, so daß beide über eine geradlinige Bewegung miteinander gekuppelt und zugleich elektrisch leitend verbunden werden können.

Die Materialstärke der elektrisch leitenden Elemente wählt man aus Kosten- und Gewichtsgründen so klein wie möglich. Wenn es sich dabei um Stanzteile handelt, so müssen diese aber wegen des Stanzvorgangs eine Mindeststärke aufweisen. Wenn nun die Steckerbuchsen nach einer Abänderung des Kleinmotors etwas weitere Einsteckschlitze für die elektrisch leitenden Elemente bekommen, so kann dies dazu führen, daß ein strammer Sitz der elektrisch leitenden Elemente in den Steckerbuchsen nicht mehr gewährleistet ist. Um nun auch insoweit eine Verbesserung zu schaffen, wird in weiterer Ausbildung der Erfindung vorgeschlagen, daß die Flachseiten der elektrisch leitenden Elemente parallel zueinander verlaufen und jede eine, insbesondere in Einsteckrichtung verlaufende Sicke aufweist. Letztere führt zu einer Verdickung des Einsteckendes dieser elektrisch leitenden Elemente, wodurch dann zumindest bei federnd aufweitbaren Steckerbuchsen auch geringfügige Maßabweichungen im Bereich der Steckbuchsen in gewissen Grenzen noch aufgefangen werden können.

Die Sicken der beiden elektrisch leitenden Elemente weisen in besonders bevorzugter Art gegeneinander. Bei ansonsten im wesentlichen ähnlicher Form der beiden elektrisch leitenden Elemente erhalten diese durch die hinsichtlich ihrer Flachseiten unterschiedliche Anbringung der Sicken eine gewisse Kennung, welche ein automatisches Sortieren möglich macht. Letzteres ist Voraussetzung für eine automatische oder zumindest teilautomatische Montage. Im übrigen können die elektrisch leitenden Elemente im Grundkörper ihres Zwischenstücks in beliebiger bekannter Weise gehalten werden bspw. klemmend oder durch Umspritzung, wenn das Zwischenstück, wie beim Ausführungsbeispiel vorgesehen, aus Kunststoff hergestellt wird.

Die elektrisch leitenden Elemente besitzen vorzugsweise eine im wesentlichen winkelförmige Gestalt. Dies bedeutet, daß bei lose auf einer Fläche aufliegenden elektrisch leitenden Elemente und paralleler Ausrichtung ihrer einen Schenkel sowie nach oben weisenden Sicken, die jeweils anderen Winkelschenkel nach entgegengesetzten Richtungen zeigen, was man zu der erwähnten Kennung der Einzelteile ausnutzen kann.

Die elektrisch leitenden Elemente können wie gesagt in den Grundkörper eingesteckt oder durch dessen Material umspritzt werden. Bei einer Variante der Erfindung erfolgt das klemmende Festhalten mit Hilfe von einer Sicke, Warze o. dgl., wobei der Einsteckschlitz bzw. das Material dort entsprechend nachgiebig ist, so daß sich die Sicke oder Warze zum klemmenden Festhalten dort etwas eingraben kann. Vorteilhaft kann das elektrisch leitende Element auch über eine Schnappverbindung festgehalten werden, bei der die Warze einen Vorsprung oder Hinterschnitt hinterklippst.

Die Verbindung des Zwischenstücks mit den Leiterbahnendstücken erfolgt wie gesagt auch steckbar. Um diese Steckverbindung rüttelfest zu machen und zu sichern, wird eine Weiterbildung der Erfindung vorgeschlagen, wobei jedes Leiterbahnendstück zwischen zwei Gabelzinken am motorfernen Winkelschenkel greift, wobei die Länge des parallelen Teils der Gabelzinken und damit der gleichbleibenden Breite des Einsteckschlitzes der Leiterbahnbreite entspricht.

Damit eine sichere elektrische Verbindung zwischen den Leiterbahnendstücken und dem Zwischenstück bzw. dessen elektrisch leitenden Elementen gewährleistet ist, wird gemäß Anspruch 9 vorgeschlagen, daß sich am Einsteckende jedes Leiterbahnendstücks eine Verdickung, insbesondere eine in Einsteckrichtung verlaufende Sicke befindet, die den Zwischenraum zwischen den parallelen Teilen der Gabelzinken zugeordnet ist. Man kann also auf diese Weise eine stramme mechanische Verbindung schaffen, die selbstverständlich eine hohe elektrische Sicherheit dieser verbindungsstellen mit sich bringt.

Weiterbildungen, welche insbesondere der vollautomatischen Montage des Zwischenstücks bzw. der aus Zwischenstück und Kleinmotor bestehenden Einheit an den Leiterbahnendstücken zugute kommen, ergeben sich insbesondere aus Anspruch 10. Vor allen Dingen die in letzterem erwähnten Einlaufschrägen ermöglichen auch dann noch die sichere Verbindung des Zwischenstücks mit den Leiterbahnendstücken, wenn diese von ihrer korrekten Lage geringfügig abweichen. Über die Einlaufschrägen werden sie sicher in den Aufnahmeschlitz eingeführt, in dessen Innerem sich die Gabeln der beiden elektrisch leitenden Elemente befinden, welche beim Aufschieben des Zwischenstücks auf die Leiterbahnendstücke mit letzteren mechanisch sowie elektrisch leitend gekuppelt werden.

Weitere Ausgestaltungen dieser Vorrichtung und daraus resultierende Vorteile ergeben sich aus den Unteransprüchen sowie der nachfolgenden Beschreibung eines Ausführungsbeispiels. Die Zeichnung zeigt dieses Ausführungsbeispiel der Erfindung. Hierbei stellen dar:
- Fig. 1: eine Draufsicht auf eine Zentralverriegelungsvorrichtung mit eingebautem Kleinmotor, der mittels der erfindungsgemäßen Vorrichtung elektrisch angeschlossen ist bei teilweise aufgebrochenem Deckel;
- Fig. 2: eine Draufsicht auf die motorseitige Fläche des Zwischenstücks mit eingebauten elektrisch leitenden Elementen in vergrößertem Maßstab;
- Fig. 3: einen Schnitt gemäß der Linie III-III der Figur 2;
- Fig. 4: in weiter vergrößertem Maßstab eine Ansicht eines der elektrisch leitenden Elements;
- Fig. 5: eine Stirnansicht dieses Elements teilweise entlang der Linie V-V geschnitten;
- Fig. 6: eine Draufsicht auf das andere elektrisch leitende Element;
- Fig. 7: eine der Figur 5 entsprechende Darstellung, teilweise entlang der Linie VII-VII der Figur 6 geschnitten;
- Fig. 8: eine der Figur 2 entsprechende Darstellung ohne die elektrisch leitenden Elemente;
- Fig. 9: einen Schnitt gemäß der Linie IX-IX der Figur 8;
- Fig. 10: eine Seitenansicht des Zwischenstücks in Richtung des Pfeils X der Figur 8;
- Fig. 11: eine Ansicht des Zwischenstücks in Richtung der Pfeils XI der Figur 10;
- Fig. 12: eine Ansicht des Zwischenstücks in Richtung des Pfeils X der Figur 8;
- Fig. 13: eine Ansicht des Zwischenstücks in Richtung des Pfeils XIII der Figur 12;
- Fig. 14: einen Schnitt gemäß der Linie XIV-XIV der Figur 13;
- Fig. 15: einen Schnitt gemäß der Linie XV-XV der Figur 8;
- Fig. 16: einen Schnitt gemäß der Linie XVI-XVI der Figur 12

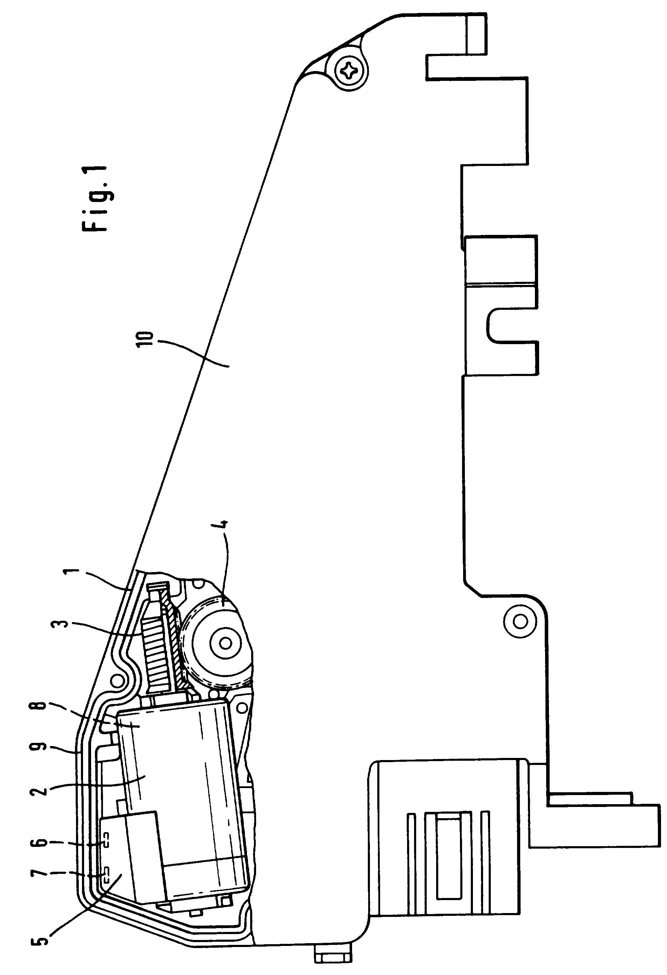

In einem Gehäuse 1 einer Zentralverriegelungsvorrichtung für ein Kraftfahrzeug ist u. a. ein elektrischer Kleinmotor 2 eingebaut, der eine Schnecke 3 antreibt. Diese arbeitet mit einem Schneckenrad 4 zusammen. Der elektrische Kleinmotor 2 - nachfolgend der Einfachheit halber lediglich noch "Motor" genannt - ist erfindungsgemäß über ein Zwischenstück 5 mit zwei elektrichen Leiterbahnen 6 und 7 elektrisch leitend verbunden, die an einer nicht näher dargestellten Platine 8 angebracht sind, welche im Falle des Ausführungsbeispiels innen am Boden des Vorrichtungsgehäuses 9 festgemacht oder durch diesen hinsichtlich des Trägers für die ausgestanzten Leiterbahnen gebildet ist. Das Vorrichtungsgehäuse 9 ist mittels eines Deckels 10 nach außen hin verschlossen. Die Leiterbahnendstücke, auf welche das Zwischenstück 5 in Figur 1 senkrecht von oben nach unten aufgesteckt wird, erstrecken sich demgemäß vom Boden des Gehäuses 1 senkrecht nach oben gegen den Beschauer hin.

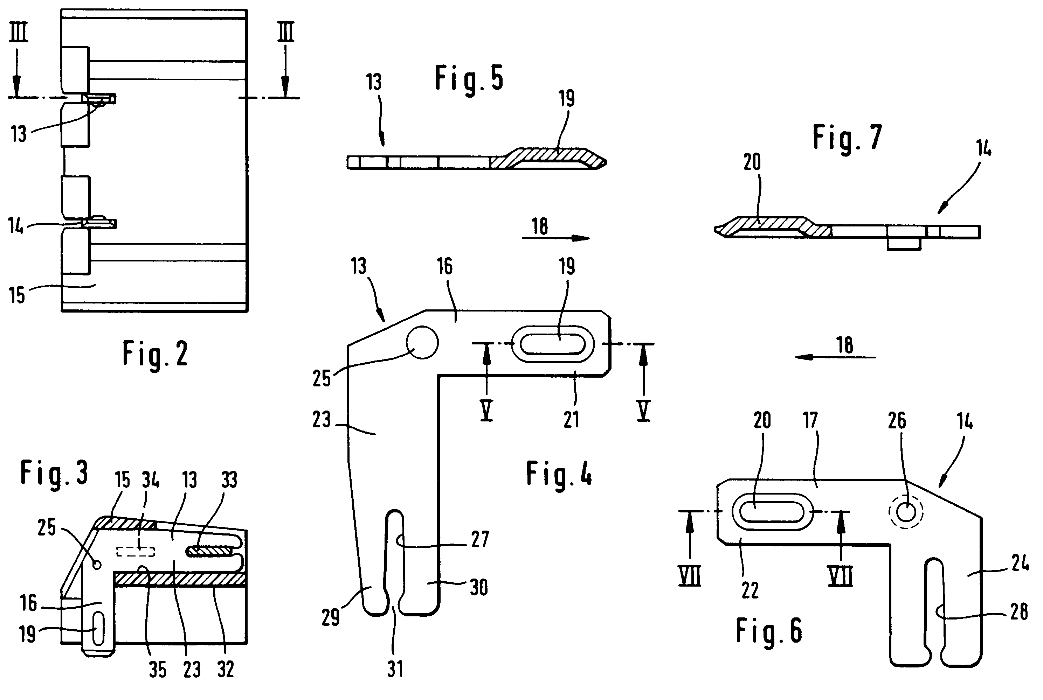

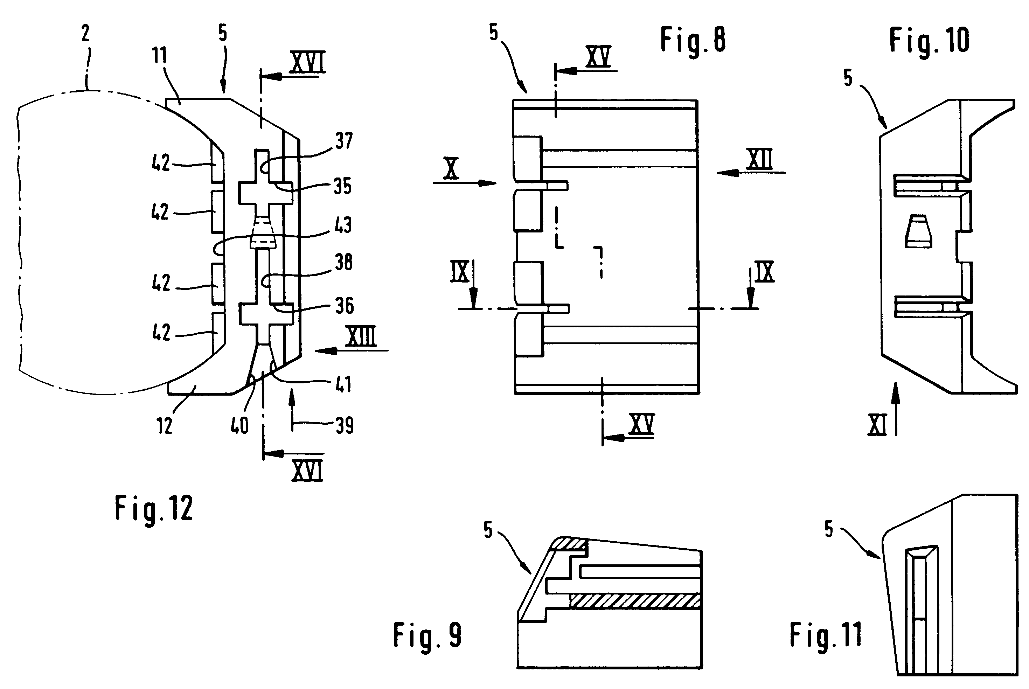

In den Figuren 8 bis 14 ist das Zwischenstück 5 im einzelnen dargestellt. Die Figuren 2 und 3 zeigen das Zwischenstück 5 mit den eingebauten elektrischen leitenden Elementen, welche in vergrößertem Maßstab aus den Figuren 4 bis 7 hervorgehen.

Gemäß bspw. Figuren 10 und 12 hat das Zwischenstück 5 eine im wesentlichen bügel- oder rinnenförmige Gestalt. Das hängt damit zusammen, daß der Motor 2 einen kreiszylindrischen Querschnitt mit zwei parallelen Abflachungen aufweist, wobei das Zwischenstück 5 gemäß Figur 12 an eine dieser Abflachungen angesetzt ist, und wobei seine beiden Schenkel 11 und 12 jeweils einem der bogenförmigen Gehäusewände zugeordnet ist bzw. diese teilweise umfaßt.

Die elektrisch leitenden Elemente 13 und 14, welche gemäß Figuren 4 und 6 jeweils eine im wesentlichen winkelförmige Gestalt aufweisen, sind beim Ausführungsbeispiel in den Grundkörper 15 des Zwischenstücks 5 lediglich eingesteckt, jedoch könnten sie genauso gut in das Kunststoffmaterial des Grundkörpers 15 eingebettet, d.h. von diesem umspritzt sein. Aus den Figuren 4 und 6 geht des weiteren hervor, daß die elektrisch leitenden Elemente unterschiedlich groß sind. Hinsichtlich der geometrischen Abmessungen entspricht der eine Schenkel 16 des elektrisch leitenden Elements 13 dem einen Schenkel 17 des elektrisch leitenden Elements 14. Jeder Schenkel 16 bzw. 17 trägt eine in seiner Längsrichtung und damit auch in Aufsteckrichtung 18 des Zwischenstücks 5 auf den Motor 2 verlaufende Sicke 19 bzw. 20. In den Figuren 4 und 6 weisen die Sickenerhöhungen nach oben also gegen den Betrachter der Zeichnung hin. In eingebautem Zustand zeigen die motorseitigen Enden 21 bzw. 22 der elektrisch leitenden Elemente 13 und 14 in die gleiche Richtung, wodurch die beiden sicken 19 und 20 gegeneinander gerichtet sin. Die erklärt weswegen der Pfeil für die Aufsteckrichtung 18 in den Figuren 4 und 6 gegenläufig gerichtet ist.

Etwa am Übergang vom einen Schenkel 16 bzw. 17 zum anderen Schenkel 23 bzw. 24 befindet sich eine weitere Ausprägung oder Sicke 25 bzw. 26, die beim Ausführungsbeispiel außen kreisförmig begrenzt ist. Sie erstreckt sich bezüglich der Sicke 19 bzw. 20 in Gegenrichtung, d. h. in Figur 4 bzw. 6 nach unten hin. Sie dient zum Festhalten des betreffenden elektrisch leitenden Elements 13 bzw. 14 im Grundkörper 15 nach Art einer Schnappverbindung, wie nachstehend noch näher beschrieben wird.

Das freie Ende des anderen Schenkels 23 bzw. 24 ist jeweils gegabelt, d. h. es befindet sich dort jeweils ein randoffener Schlitz 27 bzw. 28. Zur Bildung einer Engstelle sind die freien Enden der Gabelzinken 29 und 30 gegeneinander hin abgewinkelt bzw. ist die Schlitzwandung jeweils nach innen hin ausgebeult. Die Verengung ist in Figur 4 mit 31 bezeichnet.

Jeder mit der Sicke 19 bzw. 20 versehene eine Schenkel 16 bzw. 17 des elektrisch leitenden Elements 13 bzw. 14 ragt über die dem Motor 2 zugewandte oder daran anliegende Fläche 32 des Grundkörpers 15 des Zwischenstücks 5 hinaus und erstreckt sich auch senkrecht zu dieser Fläche. Beide Schenkel 16 und 17 verlaufen parallel zueinander und damit auch zur Bildebene und sie überragen die Fläche 32 gleich weit. Jedes ist in eine nicht dargestellte Steckerbuchse des Elektromotors 2 einsteckbar, wobei die Sicke 19 bzw. 20 für einen guten elektrischen Kontakt und auch ein klemmendes Festhalten des Zwischenstücks 5 am Motor 2 sorgt. Die Steckerbuchsen haben dementsprechend einen Schlitz und sie können bspw. durch ein U-förmiges Element gebildet werden zwischen dessen Schenkel der Schenkel 16 bzw. 17 eingreift.

Innerhalb der Verengung 31, also dort wo der randoffene Schlitz 27 bzw. 28 durch zwei parallele Ränder begrenzt ist, befindet sich bei montiertem Zwischenstück das in Figur 3 mit 33 bezeichnete Leiterplattenendstück. Es erstreckt sich in Figur 3 senkrecht zur Bildebene. Das bedeutet, daß das Zwischenstück 5, welches sich am elektrischen Kleinmotor befindet, senkrecht zur Bildebene in Figur 3 von oben nach unten auf die Leiterbahnendstücke aufgeschoben wird. Zur Verdeutlichung ist in Figur 3 mit gestrichelten Linien auch noch das andere Leiterbahnendstück 34 eingezeichnet. Es erstreckt sich jedoch nicht soweit nach oben hin wie das Leiterbahnendstück 33, weil sich das elektrisch leitende Element 14 mit dem kürzeren motorfernen Schenkel 24 unterhalb des Schenkels 23 befindet. Aus Figur 3 wird auch deutlich, weswegen der andere Schenkel 24 kürzer ist als der Schenkel 23 des elektrisch leitenden Elements 13. Der Höhenabstand der elektrisch leitenden Elemente 13 und 14 ist Figur 2 zu entnehmen.

Am Ein- oder Aufsteckende jedes Leiterbahnendstücks 22, 34 befindet sich eine Verdickung, insbesondere ein in Einsteckrichtung verlaufende Sicke, die der Sicke 19 bzw. 20 des elektrisch leitenden Elements 13, 14 entspricht, der Übersichtlichkeit halber aber in Figur 3 nicht eingezeichnet ist. Diese Sicke ist nämlich genau dem gegabelten Bereich der elektrisch leitenden Elemente zugeordnet, so daß die Gabelschenkel dadurch federelastisch etwas aufgeweitet werden können, so daß auf diese Weise ein guter mechanischer und elektrisch leitender Kontakt entsteht.

Der motorferne andere Schenkel 23 bzw. 24 ist in einen Aufnahmeschlitz 35 bzw. 36 (Figuren 12 und 3) eingeschoben und darin mit Hilfe der Sicke 25 bzw. 26 klemmend gehalten, wobei gemäß Figur 3 diese Schlitz ebenfalls eine Winkelform aufweist, so daß mit Ausnahme des freien Endes des Schenkels 16 bzw. 17 das gesamte elektrisch leitende Element 13 bzw. 14 vollkommen im aus Kunststoff bestehenden Grundkörper 15 untergebracht und dadurch elektrisch sicher verwahrt ist.

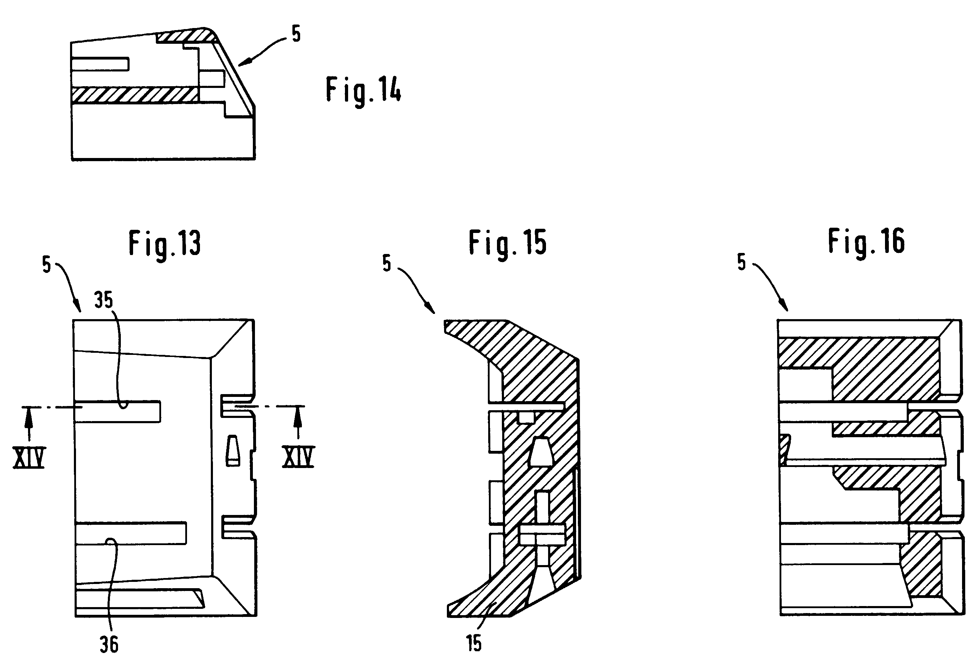

Jeder der Schlitze 35 und 36 wird von einem Aufnahmeschlitz 37 bzw. 38 (Figur 12) gekreuzt. Außerdem nimmt jeder ein Leiterbahnendstück auf. Dabei fluchtet der randoffene Schlitz 27 bzw. 28 des motorfernen Schenkels 23 bzw. 24 mit dem Aufnahmeschlitz 37 bzw. 38, so daß die Leiterbahnendstücke bei der Montage des Zwischenstücks 5 im Sinne des Pfeils 39 hindurchgeschoben werden können. In der Praxis ist es allerding so, daß das Zwischenstück 5 mit dem Elektromotor 2 entgegen dem Pfeil 39 auf die Leiterbahnendstücke 33, 34 aufgeschoben wird. Um ein gutes Einfädeln der Leiterbahnendstücke zu ermöglichen, befindet sich am Einsteckende, also dort, wo bei Aufnahmeschlitze 37 und 38 ineinander übergehen, gemeinsame Einlaufschrägen 40, 41. Selbstverständlich ist der Schlitz 38 in Pfeilrichtung 39 kürzer als der Schlitz 37, welcher das längere Leiterbahnendstück 33 aufzunehmen hat. Dies gilt gemäß Figur 13 auch für die Aufnahmeschlitze 35 und 36.

In Figur 12 sind noch Anschlagleisten 42 zu sehen, welche in entsprechende Ausnehmungen des Motorgehäuses eingreifen und dadurch die Lagesicherung und auch die Montage selbst verbessern. In eine mittige Nut 43 kann eine angeformte Feder des Motorgehäuses eingreifen.

Aus den vorstehenden Ausführungen wurde deutlich, daß mit Hilfe einer Sortiervorrichtung und der erwähnten Kennung die beiden elektrisch leitenden Elemente 13 und 14 erfaßt und vollautomatisch richtig in den Grundkörper 15 bzw. den hierfür jeweils vorgesehenen Schlitz eingeschoben werden können. Es ist aber nicht nur die vollautomatische Montage der elektrisch leitenden Elemente 13 und 14 am Zwischenstück 5 möglich, vielmehr kann auch letzteres automatisch auf den Elektromotor 2 aufgesteckt werden. Schließlich kann man in einem ebenfalls automatischen Montagevorgang die Einheit aus elektrischem Kleinmotor 2 und Zwischenstück 5 auf die Leiterbahnendstücke 33 und 34 aufschieben. Dies senkt zweifellos die Montagekosten und trägt zu einer Erhöhung der Stückzahl sowie zu einer Minderung der Ausschußquote bei. Geringfügige Änderungen im Bereich des elektrischen Kleinmotors können durch Abwandlungen des Grundkörpers 15 und/oder der elektrisch leitenden Elemente 13, 14 leicht aufgefangen werden, wobei unbedeutende Änderungen an den Einsteckbuchsen des Elektromotors ggf. schon allein durch die Sicken 19 und 20 der elektrisch leitenden Elemente 13, 14 kompensiert werden können.

Der elektrische Motor 2 besitzt vielfach keinen runden, sondern einen unrunden Querschnitt. Durch die Verwendung des in der beschriebenen Weise gestalteten Zwischenstücks 5 kann man einen solchen Motor gewissermaßen hochkantstehend im Gehäuse 1 der Zentralverriegelungsvorrichtung montieren und dadurch sehr platzsparend unterbringen.

## Patentansprüche

1. Vorrichtung zur Verbindung eines elektrischen Kleinmotors (2) mit wenigstens zwei elektrischen Leiterbahnen (6,7) einer Platine (8), insbesondere eines Gehäuses (1) einer Zentralverriegelungsvorrichtung eines Kraftfahrzeuges, wobei der Kleinmotor (2) eine Steckerbuchse pro einzusteckendem Leiterbahnendstück (33,34) aufweist und die Leiterbahnendstücke im wesentlichen senkrecht aus der Platinenebene herausragen; die Vorrichtung besteht aus einem Zwischenstück (5) zwischen dem Kleinmotor (2) und der Platine (8), wobei das Zwischenstück gebildet wird aus einem Grundkörper (15) und mindestens zwei elektrisch leitenden Elementen (13,14), wobei jeweils ein Leiterbahnendstück (33,34) über ein elektrisch leitendes Element (13,14) mit einer Steckerbuchse des Kleinmotors (2) elektrisch leitend verbindbar ist; die motorseitigen Enden der elektrisch leitenden Elemente (13,14) bilden flache Steckerstifte, die klemmend in den Steckerbuchsen des Kleinmotors einsteckbar sind; der Grundkörper weist Aufnahmeschlitze (37,38) auf, die in Aufsteckrichtung auf die Leiterbahnendstücke (33,34) verlaufen, wobei die motorfernen Enden der elektrisch leitenden Elemente (13,14) die Aufnahmeschlitze kreuzen, so daß die Leiterbahnendstücke (33,34) steckbar mit den elektrisch leitenden Elementen (13,14) verbindbar sind.

2. Vorrichtung nach Anspruch 1, dadurch **gekennzeichnet,** daß die motorseitigen Enden (21, 22) der elektrisch leitenden Elemente (13, 14) eine dem Motor (2) zugewandte oder daran anliegende Fläche (32) des Zwischenstücks (5) etwa gleich weit überragen und parallel zueinander sowie senkrecht zur genannten Fläche (32) verlaufen.

3. Vorrichtung nach Anspruch 2, dadurch **gekennzeichnet,** daß die Flachseiten der elektrisch leitenden Elemente (13, 14) parallel zueinander verlaufen und jede eine, insbesondere in Einsteckrichtung (18) verlaufende Sicke (18, 19) aufweist.

4. Vorrichtung nach Anspruch 3, dadurch **gekennzeichnet,** daß die Sicken (19, 20) der beiden elektrisch leitenden Elemente (13, 14) gegeneinander oder weg voneinander weisen.

5. Vorrichtung nach wenigstens einem der vorhergehenden Ansprüche, dadurch **gekennzeichnet,** daß das Zwischenstück (5) und der Motor (2), insbesondere im Bereich der elektrischen Steckverbindung (21, 22), formschlüssig miteinander verbunden sind.

6. Vorrichtung nach Anspruch 5, dadurch **gekennzeichnet,** daß das Zwischenstück (5) eine im wesentlichen bügelförmige Gestalt aufweist, wobei die beiden in Aufsteckrichtung (18) vorstehenden Bügelschenkel (11, 12) das Gehäuse des Motors (2) außen umgreifen

7. Vorrichtung nach wenigstens einem der vorhergehenden Ansprüche, dadurch **gekennzeichnet,** daß die elektrisch leitenden Elemente (13, 14) eine im wesentlichen winkelförmige Gestalt aufweisen und daß die elektrisch leitenden Elemente (13, 14) in Längsrichtung des motorfernen Winkelschenkels (23, 24) in den Grundkörper (15) des Zwischenstücks (5) eingesteckt sind.

8. Vorrichtung nach Anspruch 7, dadurch **gekennzeichnet,** daß der motorferne Winkelschenkel (23, 24) jedes elektrisch leitenden Elements (13, 14) gabelförmig gestaltet ist und daß die freien Enden der beiden Gabelzinken zur Bildung einer Schlitzverengung (31) gegeneinander hin umgebogen oder abgewinkelt sind.

9. Vorrichtung nach Anspruch 8, dadurch **gekennzeichnet,** daß sich am Einsteckende jedes Leiterbahnendstücks (33, 34) eine Verdickung, insbesondere eine in Einsteckrichtung verlaufende Sicke befindet, die dem Zwischenraum (27) zwischen den parallelen Teilen der Gabelzinken (29, 30) zugeordnet ist.

10. Vorrichtung nach Anspruch 1, dadurch **gekennzeichnet,** daß die Aufnahmeschlitze (37, 38) an ihrem Einsteckende für die Leiterbahnendstücke (33, 34) zur Bildung von Einlaufschrägen (40, 41) aufgeweitet sind.

## Claims

1. Device for connecting a miniature electric motor (2) with at least two electric conductor tracks (6, 7) of a printed-circuit board (8), especially with regard to a housing (1) of a central locking device of an automotive vehicle, the miniature motor (2) being provided with one socket per end piece of the conductor track (33, 34) to be inserted, and the end pieces of the conductor tracks projecting substantially vertically from the plane of the printed-circuit board; the device comprising an adapter (5) between the miniature motor (2) and the printed-circuit board (8), the adapter including a base member (15) and at least two electrically conductive elements (13, 14), one end piece of each conductor track (33, 34) being adapted to be connected in an electrically conductive way with a socket of the miniature motor (2) by way of an electrically conductive element (13, 14); the ends of the electrically conductive elements (13, 14) close to the motor form flat plug pins which are adapted to be mounted in the sockets of the miniature motor in a jammed manner; the base member has insertion slots (37, 38) which extend in the plug-in direction of the conductor track end pieces (33, 34), and the ends of the electrically conductive elements (13, 14) remote from the motor crossing the insertion slots so that the conductor track end pieces (33, 34) are adapted to be connected to the electrically conductive elements (13, 14) in a pluggable manner.

2. Device as claimed in claim 1,
**characterized** in that the ends (21, 22) of the electrically conductive elements (13, 14) close to the motor project from a surface (32) of the adapter (5) facing the motor (2) or adjacent to it approximately to the same extent, being parallel to each other and perpendicular to the above mentioned surface (32).

3. Device as claimed in claim 2,
**characterized** in that the flat sides of the electrically conductive elements (13, 14) are parallel to each other, each one presenting a depression (18, 19) extending in the plug-in direction (18).

4. Device as claimed in claim 3,
**characterized** in that the depressions (19, 20) of the two electrically conductive elements (13, 14) point towards each other or away from each other.

5. Device as claimed in at least one of the preceding claims,
**characterized** in that the adapter (5) and the motor (2), particularly in the area of the electric plug-in connection (21, 22), are connected positively.

6. Device as claimed in claim 5,
**characterized** in that the adapter (5) has an essentially angular design, the two angle legs (11, 12) which protrude in the slip-on direction (18) encompassing the housing of the motor (2) on the outside.

7. Device as claimed in at least one of the preceding claims,
**characterized** in that the electrically conductive elements (13, 14) have an essentially angular shape, and in that the electrically conductive elements (13, 14) are inserted into the base member (15) of adapter (5) in the longitudinal direction of the angle leg (23, 24) which is remote from the motor.

8. Device as claimed in claim 7,
**characterized** in that the angle leg (23, 24) of each electrically conductive element (13, 14) which is remote from the motor, has a fork-like shape, and in that the free ends of the two fork prongs are bent off towards each other or deflected in order to form a throat (31).

9. Device as claimed in claim 8,
**characterized** in that at the insertion end of each end piece of the conductor track (33, 34) there is an enlargement, especially a depression extending in the insertion direction, which is associated with the space (27) between the parallel parts of the fork prongs (29, 30).

10. Device as claimed in claim 1,
**characterized** in that the slots (37, 38) at their end for the insertion of the end pieces of the conductor tracks (33, 34) are expanded in order to form insertion slopes (40, 41).

## Revendications

1. Dispositif permettant de relier un moteur électrique (2) à faible puissance à au moins deux pistes électriquement conductrices (6, 7) d'une platine (8), notamment d'un boîtier (1) d'un dispositif de verrouillage central d'un véhicule automobile, le moteur (2) à faible distance comportant une prise femelle par tronçon d'extrémité de piste conductrice (33, 34) à enficher et les tronçons d'extrémité de piste conductrice se dressant d'une manière pratiquement perpendiculaire sur le plan de la platine, le dispositif étant constitué d'une pièce intermédiaire (5) disposée entre le moteur (2) à faible puissance et la platine (8), la pièce intermédiaire étant formée d'un corps de base (15) et d'au moins deux éléments électriquement conducteurs (13, 14), chaque tronçon d'extrémité de piste conductrice (33, 34) étant agencé de façon à pouvoir être relié d'une manière électriquement conductrice à une prise femelle du moteur (2) à faible puissance par l'intermédiaire d'un élément électriquement conducteur (13, 14), les extrémités des éléments électriquement conducteurs (13, 14) qui sont situées du côté du moteur constituant des prises mâles plates qui sont agencées de façon à pouvoir être enfichées avec serrage dans les prises femelles du moteur à faible puissance, le corps de base comportant des fentes de logement (37, 38) qui sont orientées suivant la direction d'emboîtement sur les tronçons d'extrémité de piste conductrice (33, 34), les extrémités des éléments électriquement conducteurs (13, 14) qui sont éloignées du moteur croisant les fentes de logement, de sorte que les tronçons d'extrémité de piste conductrice (33, 34) peuvent être reliés d'une manière enfichable avec les éléments électriquement conducteurs (13, 14).

2. Dispositif selon la revendication 1, caractérisé en ce que les extrémités (21, 22) des éléments électriquement conducteurs (13, 14) qui sont situées du côté du moteur dépassent d'approximativement la même distance d'une surface (32) de la pièce intermédiaire (5) qui fait face au moteur (2) ou prend appui sur ce moteur et en ce qu'elles sont orientées parallèle ment l'une à l'autre, ainsi que perpendiculairement à ladite surface (32).

3. Dispositif selon la revendication 2, caractérisé en ce que les faces planes des éléments électriquement conducteurs (13, 14) sont orientées parallèlement les unes aux autres et en ce que chacune comporte une partie repoussée (18, 19), orientée notamment suivant la direction d'enfichage (18).

4. Dispositif selon la revendication 3, caractérisé en ce que les parties moulées (19, 20) des deux éléments électriquement conducteurs (13, 14) sont tournées l'une vers l'autre ou à l'écart l'une de l'autre.

5. Dispositif selon au moins l'une des revendications précédentes, caractérisé en ce que la pièce intermédiaire (5) et le moteur (2) sont reliés l'un à l'autre par complémentarité de formes, notamment dans la zone de la liaison d'enfichage électrique (21, 22).

6. Dispositif selon la revendication 5, caractérisé en ce que la pièce intermédiaire (5) présente une configuration essentiellement en forme d'étrier, les deux ailes (11, 12) de l'étrier qui font saillie suivant la direction d'enfichage (18) entourant extérieurement le boîtier du moteur (2).

7. Dispositif selon au moins l'une des revendications précédentes, caractérisé en ce que les éléments électriquement conducteurs (13, 14) présentent une configuration essentiellement en forme de pièce coudée et en ce que les éléments électriquement conducteurs (13, 14) sont enfichés dans le corps de base (15) de la pièce intermédiaire (5) suivant la direction longitudinale de la branche de partie coudée (23, 24) qui est éloignée du moteur.

8. Dispositif selon la revendication 7, caractérisé en ce que la branche de partie coudée (23, 24) de chaque élément électriquement conducteur (13, 14) qui est éloignée du moteur est réalisée en forme de fourche et en ce que les extrémités libres des deux dents de fourche sont pliées ou coudées l'une vers l'autre de façon à former un étranglement de fente (31).

9. Dispositif selon la revendication 8, caractérisé en ce qu'il est prévu, à l'extrémité d'enfichage de chaque tronçon d'extrémité de piste conductrice (33, 34), une partie plus épaisse, notamment une partie repoussée orientée suivant la direction d'enfichage, qui est associée à l'espace intermédiaire (27) situé entre les parties parallèles des dents de fourche (29, 30), les fentes (27, 28) des extrémités en forme de fourche étant disposées entre des tronçons partiels de la fente de logement (37, 38).

10. Dispositif selon la revendication 1, caractérisé en ce que les fentes de logement (37, 38) sont élargies, à leur extrémité d'enfichage des tronçons d'extrémité de piste conductrice (33, 34), de façon à former des faces inclinées d'entrée (40, 41).
